# EUROPEAN PATENT APPLICATION

(11) **EP 3 878 877 A1**
(43) Date of publication of application: **15.09.2021**
(21) Application number: 21158939.5
(22) Date of filing: 24.02.2021
(51) Int. Cl.: C08F 220/18, C09J 7/38, C09J 133/06

(54) **WATER-DISPERSED PRESSURE-SENSITIVE ADHESIVE COMPOSITION AND PRESSURE-SENSITIVE ADHESIVE SHEET**

(30) Priority: 27.02.2020 JP 2020031153
(71) Applicant: Nitto Denko Corporation, Ibaraki-shi Osaka 567-8680 (JP)
(72) Inventor: Ikemura, Mika, Osaka, 567-8680 (JP); Shim, Hyunhee, Osaka, 567-8680 (JP)
(74) Representative: Hoffmann Eitle

(57) **Abstract**

In order to provide a water-dispersed pressure-sensitive adhesive composition suitable for forming a thin pressure-sensitive adhesive layer on a plastic substrate such as a PET separator, and a pressure-sensitive adhesive sheet including the pressure-sensitive adhesive layer formed from the composition, a water-dispersed pressure-sensitive adhesive composition of the present invention contains a water-dispersed polymer and water, has a viscosity of 1500 mPa·s or more and 6000 mPa·s or less, and has a surface tension of 30 mN/m or more and 43 mN/m or less. A pressure-sensitive adhesive sheet X1 of the present invention includes a pressure-sensitive adhesive layer 10 formed from the water-dispersed pressure-sensitive adhesive composition, and having a thickness of 20 µm or less.

## Description

### BACKGROUND OF THE INVENTION

### Field of the Invention

The present invention relates to a water-dispersed pressure-sensitive adhesive composition and a pressure-sensitive adhesive sheet.

### Description of Related Art

In recent years, single-sided pressure-sensitive adhesive sheets and double-sided pressure-sensitive adhesive sheets have been used in various technical fields. The single-sided pressure-sensitive adhesive sheet is fabricated by, for example, applying a pressure-sensitive adhesive composition obtained by dispersing or dissolving various components such as a pressure-sensitive adhesive polymer in an organic solvent onto a PET separator to form a coating film, drying the coating film to form a pressure-sensitive adhesive layer, and transferring the pressure-sensitive adhesive layer onto a substrate for a pressure-sensitive adhesive sheet. The double-sided pressure-sensitive adhesive sheet is fabricated by, for example, applying a pressure-sensitive adhesive composition onto a PET separator to form a coating film, drying the coating film to form a pressure-sensitive adhesive layer, and laminating another PET separator on the pressure-sensitive adhesive layer.

The pressure-sensitive adhesive sheets used as bonding components in electronic devices such as image display devices, which are becoming thinner and smaller, are required to have thinner pressure-sensitive adhesive layers.

The technique relating to such a pressure-sensitive adhesive sheet is described in, for example, Patent Document 1 listed below.

### Citation List

### Patent Document

Patent Document 1: Japanese Unexamined Patent Publication No. 2018-104485

### SUMMARY OF THE INVENTION

### PROBLEM TO BE SOLVED BY THE INVENTION

From the viewpoint of environmental measures, it is desired to switch a material for forming a pressure-sensitive adhesive layer of a pressure-sensitive adhesive sheet from a conventional pressure-sensitive adhesive composition containing some organic solvent to a water-dispersed pressure-sensitive adhesive composition (emulsion) containing no organic solvent.

However, since water hardly wets a plastic substrate such as a PET separator, the water-dispersed pressure-sensitive adhesive composition also hardly wets the same substrate. In other words, the water-dispersed pressure-sensitive adhesive composition is easily repelled on the surface of the plastic substrate. Therefore, in the process of producing the pressure-sensitive adhesive sheet, a coating film of the water-dispersed pressure-sensitive adhesive composition may not be appropriately formed on the plastic substrate. Further, even when the coating film itself can be formed on the plastic substrate, the coating film may significantly shrink in a plane direction of the substrate during drying. These troubles tend to occur as the water-dispersed pressure-sensitive adhesive composition is thinly applied onto the plastic substrate.

The present invention provides a water-dispersed pressure-sensitive adhesive composition suitable for forming a thin pressure-sensitive adhesive layer on a plastic substrate such as a PET separator, and a pressure-sensitive adhesive sheet including the pressure-sensitive adhesive layer formed from the composition.

### MEANS FOR SOLVING THE PROBLEM

The present invention [1] includes a water-dispersed pressure-sensitive adhesive composition including a water-dispersed polymer and water, wherein the composition has a viscosity of 1500 mPa·s or more and 6000 mPa·s or less, and a surface tension of 30 mN/m or more and 43 mN/m or less.

The present invention [2] includes the water-dispersed pressure-sensitive adhesive composition described in the above-described [1], wherein the water-dispersed polymer is a polymer of a monomer component containing 70% by mass or more and 99.5% by mass or less of an alkyl (meth)acrylate, and 0.1% by mass or more and 10% by mass or less of a carboxy group-containing monomer.

The present invention [3] includes the water-dispersed pressure-sensitive adhesive composition described in the above-described [2], wherein the carboxy group-containing monomer is an acrylic acid and/or a methacrylic acid.

The present invention [4] includes the water-dispersed pressure-sensitive adhesive composition described in any one of the above-described [1] to [3], wherein the water-dispersed polymer includes a monomer unit derived from a reactive emulsifier.

The present invention [5] includes the water-dispersed pressure-sensitive adhesive composition described in any one of the above-described [1] to [4] further including a thickener and/or a leveling agent.

The present invention [6] includes the water-dispersed pressure-sensitive adhesive composition described in the above-described [5], wherein the thickener includes a polyacrylic acid.

The present invention [7] includes the water-dispersed pressure-sensitive adhesive composition described in the above-described [5] or [6], wherein the content of the thickener is 0.5 parts by mass or more and 7 parts by mass or less with respect to 100 parts by mass of the water-dispersed polymer.

The present invention [8] includes the water-dispersed pressure-sensitive adhesive composition described in any one of the above-described [5] to [7], wherein the leveling agent includes at least one selected from the group consisting of sodium dialkylsulfosuccinate, acetylene glycol ethylene oxide surfactant, and modified silicone surfactant.

The present invention [9] includes the water-dispersed pressure-sensitive adhesive composition described in any one of the above-described [5] to [8], wherein the content of the leveling agent is 0.5 parts by mass or more and 8 parts by mass or less with respect to 100 parts by mass of the water-dispersed polymer.

The present invention [10] includes the water-dispersed pressure-sensitive adhesive composition described in any one of the above-described [5] to [9], wherein the total content of the thickener and the leveling agent is 2 parts by mass or more and 10 parts by mass or less with respect to 100 parts by mass of the water-dispersed polymer.

The present invention [11] includes a pressure-sensitive adhesive sheet including a pressure-sensitive adhesive layer formed from the water-dispersed pressure-sensitive adhesive composition according to any one of the above-described [1] to [10] and, having a thickness of 20 µm or less.

### EFFECT OF THE INVENTION

The water-dispersed pressure-sensitive adhesive composition of the present invention is hard to be repelled on the surface of a plastic substrate such as a PET separator. Therefore, according to the water-dispersed pressure-sensitive adhesive composition, it is easy to form a coating film by applicating the composition onto the plastic substrate, and the coating film does not easily shrink in a plane direction of the substrate during a drying process of the coating film on the plastic substrate. Thus, the water-dispersed pressure-sensitive adhesive composition is suitable for forming a thin pressure-sensitive adhesive layer on the plastic substrate. In addition, such a water-dispersed pressure-sensitive adhesive composition is suitable for fabricating a pressure-sensitive adhesive sheet in which a thin pressure-sensitive adhesive layer is appropriately formed.

### BRIEF DESCRIPTION OF THE DRAWINGS

FIG. 1 shows a cross-sectional schematic view of one embodiment of a pressure-sensitive adhesive sheet according to the present invention.
FIG. 2 shows a cross-sectional schematic view of another embodiment of a pressure-sensitive adhesive sheet according to the present invention.

### DESCRIPTION OF EMBODIMENTS

A water-dispersed pressure-sensitive adhesive composition according to one embodiment of the present invention includes a water-dispersed polymer and water, has the viscosity of 1500 mPa·s or more and 6000 mPa·s or less, and has the surface tension of 30 mN/m or more and 43 mN/m or less. The viscosity is preferably 1600 mPa·s or more and 5800 mPa·s or less. A value of the viscosity is defined as a value measured by a method to be described later regarding the viscosity of the water-dispersed pressure-sensitive adhesive composition of Examples to be described later. The surface tension is preferably 32 mN/m or more and 42 mN/m or less. A value of the surface tension is defined as a value determined based on a method to be described later regarding the surface tension of the water-dispersed pressure-sensitive adhesive composition of Examples to be described later.

Examples of the water-dispersed polymer include a water-dispersed acrylic polymer, a water-dispersed urethane polymer, a water-dispersed polyaniline polymer, and a water-dispersed polyester polymer, and preferably, a water-dispersed acrylic polymer is used. The acrylic polymer is a polymer containing a monomer unit derived from an alkyl (meth)acrylate in the largest amount in mass ratio, and is, for example, a polymer obtained by polymerizing a monomer component containing an alkyl (meth)acrylate at a ratio of 50% by mass or more. The term "(meth)acrylic acid" refers to an acrylic acid and/or a methacrylic acid.

An example of the alkyl (meth)acrylate includes an alkyl (meth)acrylate having a straight-chain or branched alkyl group having 1 to 20 carbon atoms. Examples thereof include methyl (meth)acrylate, ethyl (meth)acrylate, propyl (meth)acrylate, n-butyl (meth)acrylate, isopropyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acylate, isotridecyl (meth)acrylate, tetradecyl (meth)acrylate, isotetradecyl (meth)acrylate, pentadecyl (meth)acrylate, hexadecyl (meth)acrylate, heptadecyl (meth)acrylate, octadecyl (meth)acrylate, isooctadecyl (meth)acrylate, nonadecyl (meth)acrylate, and eicosyl (meth)acrylate. These alkyl (meth)acrylates may be used alone or in combination of two or more. As the alkyl (meth)acylate, preferably, an alkyl acylate having an alkyl group having 1 to 12 carbon atoms is used, more preferably, a methyl acrylate and an alkyl acrylate having an alkyl group having 2 to 8 carbon atoms are used, further more preferably, a methyl acrylate and a 2-ethylhexyl acrylate are used.

A ratio of the alkyl (meth)acrylate in the monomer component is preferably 70% by mass or more, more preferably 80% by mass or more, further more preferably 90% by mass or more, particularly preferably 95% by mass or more from the viewpoint of appropriately developing basic properties such as pressure-sensitive adhesive properties in the pressure-sensitive adhesive layer formed from the water-dispersed pressure-sensitive adhesive composition. The ratio of the alkyl (meth)acrylate in the monomer component is preferably 99.5% by mass or less, more preferably 99% by mass or less.

The monomer component may contain one or two or more kinds of functional group-containing vinyl monomers copolymerizable with the alkyl (meth)acylate. The functional group-containing vinyl monomer serves to modify the acrylic polymer, such as ensuring the cohesive force of the acrylic polymer and introducing a cross-linking point into the acrylic polymer. A ratio of the functional group-containing vinyl monomer in the monomer component is preferably 0.1% by mass or more, more preferably 0.5% by mass or more, further more preferably 1.5% by mass or more from the viewpoint of ensuring advantages of using the functional group-containing vinyl monomer. The ratio of the functional group-containing vinyl monomer in the monomer component is preferably 10% by mass or less, more preferably 5% by mass or less, further more preferably 3% by mass or less.

Examples of the functional group-containing vinyl monomer include a carboxy group-containing vinyl monomer (carboxy group-containing monomer), an acid anhydride vinyl monomer, a hydroxyl group-containing vinyl monomer, a sulfo group-containing vinyl monomer, a phosphoric acid group-containing vinyl monomer, a cyano group-containing vinyl monomer, and a glycidyl group-containing vinyl monomer. These functional group-containing vinyl monomers may be used alone or in combination of two or more.

Examples of the carboxy group-containing vinyl monomer include acrylic acid, methacrylic acid, 2-carboxyethyl (meth)acrylate, carboxypentyl (meth)acrylate, itaconic acid, maleic acid, fumaric acid, and crotonic acid. The monomer component preferably includes a carboxy group-containing vinyl monomer, more preferably includes an acrylic acid and/or a methacrylic acid.

Examples of the acid anhydride vinyl monomer include a maleic anhydride and an itaconic anhydride.

Examples of the hydroxyl group-containing vinyl monomer include 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate.

Examples of the sulfo group-containing vinyl monomer include styrene sulfonic acid, allyl sulfonic acid, sodium vinylsulfonate, 2-(meth)acrylamido-2-methylpropanesulfonic acid, (meth)acrylamidopropanesulfonic acid, sulfopropyl (meth)acrylate, and (meth)acryloyloxynaphthalenesulfonic acid.

An example of the phosphate group-containing vinyl monomer includes 2-hydroxyethylacryloyl phosphate.

Examples of the cyano group-containing vinyl monomer include acrylonitrile and methacrylonitrile.

Examples of the glycidyl group-containing vinyl monomer include glycidyl (meth)acrylate and (meth)acrylic acid-2-ethylglycidyl ether.

The water-dispersed acrylic polymer can be, for example, formed by emulsion polymerization of the above-described monomer component. In the emulsion polymerization, for example, first, a mixture containing a monomer component necessary for forming an acrylic polymer, an emulsifier, and water is stirred to prepare a monomer emulsion. Next, a polymerization initiator is added to the monomer emulsion to initiate a polymerization reaction. In the polymerization reaction, a chain transfer agent may be used to adjust a molecular weight of the acrylic polymer. As a polymerization method, dropwise polymerization or collective polymerization may be used. The polymerization time is, for example, 0.5 to 10 hours. The polymerization temperature is, for example, 50°C to 80°C.

Examples of the emulsifier include anionic emulsifiers such as sodium polyoxyethylene lauryl sulfate, sodium lauryl sulfate, ammonium lauryl sulfate, sodium dodecyl benzene sulfonate, sodium polyoxyethylene alkyl ether sulfate, ammonium polyoxyethylene alkyl phenyl ether sulfate, sodium polyoxyethylene alkyl phenyl ether sulfate, and sodium polyoxyethylene alkyl sulfosuccinate. Examples of the emulsifier also include nonionic emulsifiers such as polyoxyethylene alkyl ether, polyoxyethylene alkyl phenyl ether, polyoxyethylene fatty acid ester, and polyoxyethylene polyoxypropylene block polymer. In addition, an example of the emulsifier includes a radically polymerizable emulsifier (reactive emulsifier) in which a radically polymerizable functional group such as a vinyl group, a propenyl group, an isopropenyl group, a vinyl ether group, and an allyl ether group is introduced into the anionic emulsifier or the nonionic emulsifier. When the reactive emulsifier is used, an acrylic polymer which is a water-dispersed polymer obtained by the emulsion polymerization includes a monomer unit derived from the reactive emulsifier. Such a configuration is suitable for suppressing contamination of an adherend with a low molecular weight component which moves in the pressure-sensitive adhesive layer and reaches the surface of the adherend when the pressure-sensitive adhesive layer formed from the present water-dispersed pressure-sensitive adhesive composition is attached to the adherend. These emulsifiers may be used alone or in combination of two or more. A mixing amount of the emulsifier is, for example, 0.2 to 10 parts by mass with respect to 100 parts by mass of the monomer component.

Examples of the polymerization initiator include an azo polymerization initiator and a peroxide polymerization initiator. Examples of the azo polymerization initiator include 2,2'-azobisisobutyronitrile, 2,2'-azobis(2-amidinopropane)dihydrochloride, 2,2'-azobis[2-(5-methyl-2-imidazolin-2-yl)propane]dihydrochloride, and 2,2'-azobis(N,N'-dimethyleneisobutylamidine). Examples of the peroxide polymerization initiator include benzoyl peroxide, t-butyl hydroperoxide, and hydrogen peroxide. These polymerization initiators may be used alone or in combination of two or more. A mixing amount of the polymerization initiator is, for example, 0.01 to 2 parts by mass with respect to 100 parts by mass of the monomer component.

Examples of the chain transfer agent include glycidyl mercaptan, mercaptoacetic acid, 2-mercaptoethanol, t-dodecanethiol, thioglycolic acid, 2-ethylhexyl thioglycolate, and 2,3-dimercapto-1-propanol. These chain transfer agents may be used alone or in combination of two or more. A mixing amount of the chain transfer agent is, for example, 0.001 to 0.5 parts by mass with respect to 100 parts by mass of the monomer component.

A weight average molecular weight (Mw) of the acrylic polymer, for example, thus formed is, for example, 100000 or more, preferably 300000 or more, and for example, 5000000 or less, preferably 3000000 or less. The weight average molecular weight of the acrylic polymer is measured by gel permeation chromatography (GPC) and calculated in terms of polystyrene.

The water-dispersed pressure-sensitive adhesive composition may contain another component in addition to the water-dispersed polymer. Examples of the other component include thickeners, leveling agents, tackifiers, silane coupling agents, cross-linking agents, fillers, antioxidants, surfactants, and antistatic agents. From the viewpoint of ensuring the above-described viscosity and surface tension of the water-dispersed pressure-sensitive adhesive composition, the water-dispersed pressure-sensitive adhesive composition contains at least one selected from the group consisting of thickener, leveling agent, tackifier, and silane coupling agent, and more preferably contains the thickener and/or the leveling agent.

Examples of the thickener include polyacrylic acid thickeners such as polyacrylic acid, urethane thickeners, and polyvinyl alcohol thickeners, and preferably, polyacrylic acid is used. Examples of a commercially available product of the thickener include a polyacrylic acid (Mw: 250000) manufactured by FUJIFILM Wako Pure Chemical Corporation, and "Aron B-500" manufactured by TOAGOSEI CO., LTD.

In the water-dispersed pressure-sensitive adhesive composition, from the viewpoint of ensuring the above-described viscosity and surface tension, the content of the thickener is, with respect to 100 parts by mass of the water-dispersed polymer, preferably 0.5 parts by mass or more, more preferably 1 part by mass or more, further more preferably 1.5 parts by mass or more, and preferably 7 parts by mass or less, more preferably 6 parts by mass or less, further more preferably 5 parts by mass or less.

Examples of the leveling agent include "SURFYNOL 420" (acetylene glycol ethylene oxide adduct surfactant, manufactured by Nissin Chemical Industry Co., Ltd.) and "PELEX OT-P" (sodium dialkyl sulfosuccinate, manufactured by Kao Corporation). Examples of the leveling agent include "NOPCO WET 50" (sulfonic acid anionic surfactant), "SN WET 126" (modified silicone/ special polyether surfactant), "SN WET FST2" (nonionic wetting agent of polyoxyalkylene amine), "SN WET S" (nonionic wetting agent of polyoxyalkylene amine ether), and "SN WET 125" (modified silicone surfactant) (all of them are manufactured by SAN NOPCO LIMITED). From the viewpoint of ensuring the above-described viscosity and surface tension of the water-dispersed pressure-sensitive adhesive composition, the leveling agent preferably includes at least one selected from the group consisting of sodium dialkyl sulfosuccinate, acetylene glycol ethylene oxide adduct surfactant, and modified silicone surfactant.

In the water-dispersed pressure-sensitive adhesive composition, from the viewpoint of ensuring the above-described viscosity and surface tension, the content of the leveling agent is, with respect to 100 parts by mass of the water-dispersed polymer, preferably 0.5 parts by mass or more, more preferably 2 parts by mass or more, further more preferably 2.5 parts by mass or more, and preferably 8 parts by mass or less, more preferably 6 parts by mass or less, further more preferably 4 parts by mass or less.

In the water-dispersed pressure-sensitive adhesive composition, from the viewpoint of achieving both of the viscosity and the surface tension described above, the total content of the thickener and the leveling agent is, with respect to 100 parts by mass of the water-dispersed polymer, preferably 2 parts by mass or more, more preferably 3 parts by mass or more, further more preferably 4 parts by mass or more, and preferably 10 parts by mass or less, more preferably 8 parts by mass or less, further more preferably 6 parts by mass or less.

Examples of the tackifier include various tackifier resins such as rosin resins, rosin derivative resins, petroleum resins, terpene resins, phenol resins, and ketone resins. A mixing amount of the tackifier is, for example, 5 parts by mass or more and, for example, 40 parts by mass or less with respect to 100 parts by mass of the water-dispersed polymer.

Examples of the silane coupling agent include 3-methacryloxypropyltrimethoxysilane, 3-methacryloxypropylmethyldimethoxysilane, 3-methacryloxypropylmethyldiethoxysilane, and 3-methacryloxypropyltriethoxysilane. A mixing amount of the silane coupling agent is, for example, 0.005 parts by mass or more and for example, 1 part by mass or less with respect to 100 parts by mass of the water-dispersed polymer.

The water-dispersed pressure-sensitive adhesive composition may be prepared, for example, by adding various components to an emulsion polymerization liquid of the water-dispersed polymer. In addition, the water-dispersed pressure-sensitive adhesive composition may be increased or decreased in its water content to adjust the solid content concentration.

The solid content concentration of the water-dispersed pressure-sensitive adhesive composition is preferably 30% by mass or more, and preferably 60% by mass or less, more preferably 50% by mass or less. According to such a configuration, it is easy to ensure the above-described viscosity and surface tension of the water-dispersed pressure-sensitive adhesive composition.

As described above, the water-dispersed pressure-sensitive adhesive composition has the viscosity of 1500 mPa·s or more and 6000 mPa·s or less, preferably 1600 mPa·s or more and 5800 mPa·s or less; and has the surface tension of 30 mN/m or more and 43 mN/m or less, preferably 32 mN/m or more and 42 mN/m or less. The water-dispersed pressure-sensitive adhesive composition having such a configuration is hard to be repelled on the surface of a plastic substrate such as a PET separator. Therefore, according to the present water-dispersed pressure-sensitive adhesive composition, it is easy to form a coating film by applicating the composition onto the plastic substrate, and the coating film does not easily shrink in a plane direction of the substrate during the drying process of the coating film on the plastic substrate. Thus, the present water-dispersed pressure-sensitive adhesive composition is suitable for forming a thin pressure-sensitive adhesive layer on the plastic substrate. In addition, such a water-dispersed pressure-sensitive adhesive composition is suitable for fabricating a pressure-sensitive adhesive sheet in which a thin pressure-sensitive adhesive layer is appropriately formed. When the water-dispersed pressure-sensitive adhesive composition having the viscosity of above 6000 mPa s is applied to the surface of the plastic substrate such as the PET separator to form the coating film, streaked surface unevenness may be formed on an exposed surface of the coating film to cause an appearance defect in the formed pressure-sensitive adhesive layer. With the water-dispersed pressure-sensitive adhesive composition according to the above-described embodiment, such a problem is easily avoided.

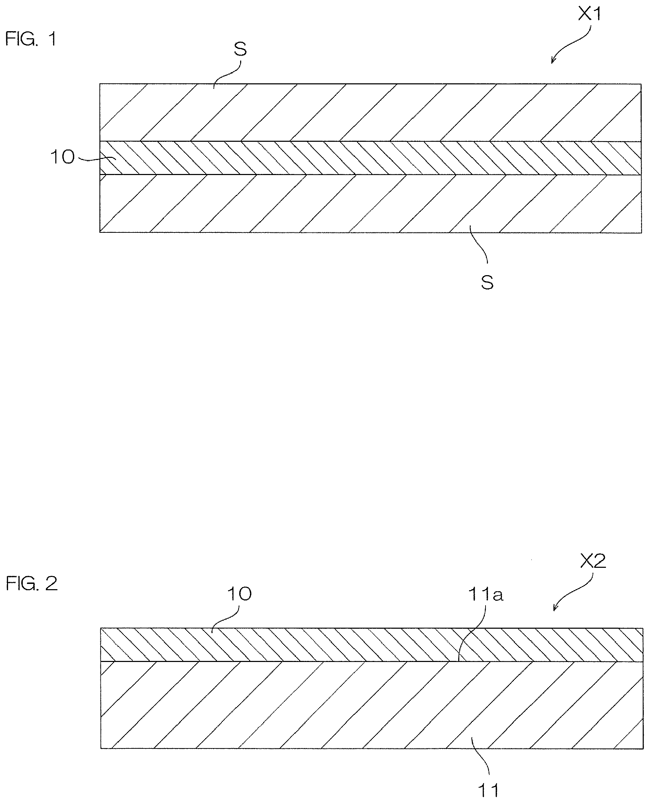

FIG. 1 shows a cross-sectional schematic view of a pressure-sensitive adhesive sheet XI which is one embodiment of the present invention. The pressure-sensitive adhesive sheet XI is a double-sided pressure-sensitive adhesive sheet including a pressure-sensitive adhesive layer 10, a separator S (first separator) disposed on one side in a thickness direction of the adhesive layer, and another separator S (second separator) disposed on the other side in the thickness direction of the pressure-sensitive adhesive layer 10.

The pressure-sensitive adhesive layer 10 is a pressure-sensitive adhesive layer formed from the above-described water-dispersed pressure-sensitive adhesive composition. A thickness of the pressure-sensitive adhesive layer 10 is preferably 20 µm or less, more preferably 15 µm or less. The thickness of the pressure-sensitive adhesive layer 10 is, for example, 5 µm or more, preferably 10 µm or more.

The separator S is an element for covering and protecting the pressure-sensitive adhesive layer 10 as the pressure-sensitive adhesive sheet XI, and is peeled from the pressure-sensitive adhesive sheet XI when the pressure-sensitive adhesive sheet XI is used. The separator S is a plastic film in this embodiment, and examples of a material for the separator S include polyethylene terephthalate (PET), polyethylene, polypropylene, and polytetrafluoroethylene. The materials of the two separators S may be the same or different. Each of the separators S may be subjected to a surface treatment by a peeling agent such as a fluorine peeling agent and a long-chain alkyl acrylate peeling agent.

A thickness of the separator S is, for example, 5 µm or more, preferably 10 µm or more, and for example, 200 µm or less, preferably 100 µm or less. The thickness of the two separators S may be the same or different.

The pressure-sensitive adhesive sheet XI may be produced, for example, as follows. First, a coating film is formed by applying the above-described water-dispersed pressure-sensitive adhesive composition on one of the separators S (coating film forming step). Next, the coating film is dried on the separator to form the pressure-sensitive adhesive layer 10 (drying step). Then, the other separator S is laminated on the exposed surface of the formed pressure-sensitive adhesive layer 10.

In the coating film forming step, since the water-dispersed pressure-sensitive adhesive composition is hard to be repelled on the surface of the separator S, which is a plastic film (plastic substrate), it is easy to form a coating film of the water-dispersed pressure-sensitive adhesive composition. In addition, in the drying step, the coating film on the separator S does not easily shrink in the plane direction of the substrate, and the pressure-sensitive adhesive layer 10 is easily formed appropriately. Therefore, the pressure-sensitive adhesive sheet XI is suitable for being formed as a double-sided pressure-sensitive adhesive sheet including the thin pressure-sensitive adhesive layer 10.

FIG. 2 shows a cross-sectional schematic view of a pressure-sensitive adhesive sheet X2 which is one embodiment of the present invention. The pressure-sensitive adhesive sheet X2 is a single-sided pressure-sensitive adhesive sheet including the pressure-sensitive adhesive layer 10 and a substrate 11 disposed on one side in the thickness direction of the adhesive layer 10. The pressure-sensitive adhesive sheet X2 is different from the pressure-sensitive adhesive sheet XI in that the substrate 11 is provided instead of the separators S.

The substrate 11 is an element which functions as a support in the pressure-sensitive adhesive sheet X2. Examples of a material for the substrate 11 include polyolefins such as polypropylene and polyethylene; polyesters such as polyethylene terephthalate (PET); polycarbonate; polyamide; polyimide; acrylic; polystyrene; acetate; polyether sulfone; and triacetyl cellulose. The substrate 11 may be made of one kind of material or may be made of two or more kinds of materials. Further, a surface 11a of the substrate 11 on the side of the pressure-sensitive adhesive layer 10 is preferably subjected to a surface treatment for improving adhesion to the pressure-sensitive adhesive layer 10. Examples of the surface treatment include physical treatment such as corona treatment and plasma treatment, and chemical treatment such as priming treatment. A thickness of the substrate 11 is, for example, 10 µm or more, preferably 20 µm or more, and for example, 200 µm or less, more preferably 150 µm or less.

The pressure-sensitive adhesive sheet X2 may be produced, for example, as follows. First, a coating film is formed by applying the above-described water-dispersed pressure-sensitive adhesive composition onto a predetermined plastic substrate (coating film forming step). Examples of the plastic substrate include a polyethylene terephthalate (PET) film, a polyethylene film, a polypropylene film, and a polytetrafluoroethylene film. Next, the coating film is dried on the plastic substrate to form the pressure-sensitive adhesive layer 10 (drying step). Next, the formed pressure-sensitive adhesive layer 10 is transferred onto the surface 11a of the substrate 11. Thereafter, the above-described separator S may be laminated on the exposed surface of the pressure-sensitive adhesive layer 10 on the substrate 11.

In the coating film forming step, since the water-dispersed pressure-sensitive adhesive composition is hard to be repelled on the surface of the plastic substrate, it is easy to form a coating film of the water-dispersed pressure-sensitive adhesive composition. In addition, in the drying step, the coating film on the plastic substrate does not easily shrink in the plane direction of the substrate, and the pressure-sensitive adhesive layer 10 is easily formed appropriately. Therefore, the pressure-sensitive adhesive sheet X2 is suitable for being formed as a single-sided pressure-sensitive adhesive sheet including the thin pressure-sensitive adhesive layer 10. Examples

### [Preparation Examples of Acrylic Polymer]

In a vessel, a mixture containing 33 parts by mass of distilled water, 85 parts by mass of a 2-ethylhexyl acrylate, 13 parts by mass of a methyl acrylate, 1.25 parts by mass of an acrylic acid, 0.75 parts by mass of a methacrylic acid, 0.025 parts by mass of a t-dodecanethiol as a chain transfer agent, 1.91 parts by mass of a reactive emulsifier (trade name "AQUALON KH-1025", manufactured by DKS Co. Ltd.), and 0.02 parts by mass of a silane coupling agent (trade name "KBM-503", manufactured by Shin-Etsu Chemical Co., Ltd.) was stirred by a homomixer to prepare a monomer emulsion. Next, a mixture containing 67 parts by mass of distilled water and 0.09 parts by mass of a reactive emulsifier (trade name "AQUALON KH-1025", manufactured by DKS Co. Ltd.) was nitrogen-substituted at room temperature (25°C) for one hour, while stirring in a reaction vessel equipped with a reflux condenser tube, a nitrogen introduction pipe, a thermometer, and a stirrer. Next, 0.1 parts by mass of a polymerization initiator (trade name "VA-057", manufactured by FUJIFILM Wako Pure Chemical Corporation) was added to this mixture, and then, the above-described monomer emulsion was added dropwise to the mixture over a period of four hours to proceed an emulsion polymerization reaction. Next, the reaction liquid was aged at 70°C for one hour, and then, aged for another two hours after the addition of 0.05 parts by mass of the above-described polymerization initiator. Then, the solution thus obtained was cooled to room temperature, and then, the pH of the solution was adjusted to 6 by adding an aqueous solution of 10% by mass of ammonia. As described above, an acrylic polymer emulsion containing an acrylic polymer was prepared.

### [Example 1]

### (Preparation of Water-Dispersed Pressure-Sensitive Adhesive Composition)

The acrylic polymer emulsion was blended and mixed with 0.5 parts by mass of a thickener (polyacrylic acid, weight average molecular weight of 250000, manufactured by FUJIFILM Wako Pure Chemical Corporation), 3.6 parts by mass of a first leveling agent (trade name "PELEX OT-P", manufactured by Kao Corporation), 30 parts by mass of a tackifier (trade name "SUPER ESTER E-865NT", manufactured by ARAKAWA CHEMICAL INDUSTRIES, LTD.), and 0.07 parts by mass of a silane coupling agent (trade name "Z-6210 SILANE" manufactured by Dow Corning Toray Co., Ltd.) with respect to 100 parts by weight of an acrylic polymer (solid content of the acrylic polymer emulsion) in the acrylic polymer emulsion. Then, the solution thus obtained was neutralized by the addition of an aqueous solution of 10% by mass of ammonia, and then, adjusted to the solid content concentration of 40% by mass by the addition of distilled water. Thus, the water-dispersed pressure-sensitive adhesive composition of Example 1 was obtained (in Table 1, the unit of each value representing the composition is the "parts by mass").

### (Fabrication of Pressure-Sensitive Adhesive Sheet)

First, a coating film was formed by applying the water-dispersed pressure-sensitive adhesive composition of Example 1 onto a PET separator (trade name "DIAFOIL MRF#38", manufactured by Mitsubishi Chemical Corporation). Next, the coating film on the separator was left to stand at room temperature for three minutes, and then, dried in an oven for three minutes to form a pressure-sensitive adhesive layer having a thickness of 10 µm on the PET separator. The drying temperature was set at 100°C. In this way, a pressure-sensitive adhesive sheet was fabricated.

### [Example 2]

A water-dispersed pressure-sensitive adhesive composition and a pressure-sensitive adhesive sheet of Example 2 were obtained in the same manner as the water-dispersed pressure-sensitive adhesive composition and the pressure-sensitive adhesive sheet of Example 1, except that the mixing amount of the thickener was changed from 0.5 parts by mass to 2.5 parts by mass, and 3.0 parts by mass of a second leveling agent (trade name "SURFYNOL 420", manufactured by Nissin Chemical Industry Co., Ltd.) was blended instead of 3.6 parts by mass of the first leveling agent.

### [Example 3]

A water-dispersed pressure-sensitive adhesive composition and a pressure-sensitive adhesive sheet of Example 3 were obtained in the same manner as the water-dispersed pressure-sensitive adhesive composition and the pressure-sensitive adhesive sheet of Example 1, except that the mixing amount of the thickener was changed from 0.5 parts by mass to 3,0 parts by mass, 2.7 parts by mass of a third leveling agent (trade name "SN WET 125", manufactured by SAN NOPCO LIMITED) was blended instead of 3.6 parts by mass of the first leveling agent, and the solid content concentration was changed from 40% by mass to 30% by mass.

### [Comparative Examples 1 and 2]

Each water-dispersed pressure-sensitive adhesive composition and each pressure-sensitive adhesive sheet of Comparative Examples 1 and 2 were obtained in the same manner as the water-dispersed pressure-sensitive adhesive composition and the pressure-sensitive adhesive sheet of Example 1, except that the mixing amount of the thickener was changed from 0.5 parts by mass to 0.35 parts by mass (Comparative Example 1) or 1.0 part by mass (Comparative Example 2), and 1.6 parts by mass (Comparative Example 1) or 0.85 parts by mass (Comparative Example 2) of the above-described third leveling agent was blended instead of 3.6 parts by mass of the first leveling agent.

### (Measurement of Viscosity)

The viscosity (mPa·s) of each of the water-dispersed pressure-sensitive adhesive compositions of Examples 1 to 3 and Comparative Examples 1 and 2 was measured using a B-type viscometer (manufactured by TOKIMEC INC.). In the viscosity measurement, the measurement temperature was set at 25°C, a No. 5 rotor was used, the rotor rotation speed in the device used was set at 20 rpm, and the measurement time was set at one minute. The measurement results are listed in Table 1.

### (Measurement of Surface Tension)

The surface tension of each of the water-dispersed pressure-sensitive adhesive compositions of Examples 1 to 3 and Comparative Examples 1 and 2 was examined using a surface tension measuring device (trade name "Wilhelmy-type surface tensiometer, manufactured by Kyowa Interface Science Co., Ltd.) based on the du Nouy method (ring method) described in JIS-K3362: 2008. Specifically, first, about 60 mL of a water-dispersed pressure-sensitive adhesive composition as a sample liquid was poured into a wide-mouth cup (volume of 100 mL) for measurement, and placed on a stage provided in the device. The stage was movable up and down. Then, a platinum ring (ring diameter of 14.45 mm, ring wire diameter of 0.40 mm) after acetone cleaning was suspended above the sample liquid (the surface formed by the platinum ring was parallel to the liquid surface of the sample liquid). Next, at a temperature of 25°C, the platinum ring was once immersed in the sample liquid (pre-wet) and was raised relative to the sample liquid. Then, at a temperature of 25°C, the platinum ring was once immersed in the sample liquid and was raised relative to the sample liquid, a peak value of the force (downward tensile force) acting on the ring was measured when the platinum ring was separated from the surface of the sample liquid, and the surface tension of the sample liquid (water-dispersed pressure-sensitive adhesive composition) was determined from the measured value. In this measurement, the stage rising rate was set at 0.200 mm/sec, the stage descending rate was set at 0.200 mm/sec, the pre-wet stage rising rate was set at 0.700 mm/sec, the pre-wet stage descending rate was set at 0.700 mm/sec, the pre-wet immersion distance was set at 2.5 mm, and the pre-wet immersion time was set at 5 seconds. The measurement results are listed in Table 1.

### (Evaluation of Wettability)

With respect to each of the water-dispersed pressure-sensitive adhesive compositions of Examples 1 to 3 and Comparative Examples 1 and 2, a first width (initial width) of a coating film formed on a PET separator in a rectangular shape when viewed from the top in a coating film forming step of a pressure-sensitive adhesive sheet fabrication process was measured, and a second width (width in the same direction as the first width) of the pressure-sensitive adhesive layer formed from the coating film through a drying step was measured. Then, a ratio of the second width to the first width was obtained as a wetting rate (%). Regarding the wettability of the water-dispersed pressure-sensitive adhesive composition to a PET separator, which is a plastic substrate, a case where the wetting rate is 100% was evaluated as "Excellent", a case where the wetting rate is 90% or more and below 100% was evaluated as "Good", and a case where the wetting rate is below 90% was evaluated as "No Good". The evaluation results are listed in Table 1.

**[Table 1]**

| | Ex. 1 | Ex. 2 | Ex. 3 | Comparative Ex. 1 | Comparative Ex. 2 |
|---|---|---|---|---|---|
| Acrylic Polymer | 100 | 100 | 100 | 100 | 100 |
| Thickener (Polyacrylic Acid) | 0.5 | 2.5 | 3.0 | 0.35 | 1.0 |
| First Leveling Agent (PELEX OT-P) | 3.6 | - | - | - | - |
| Second Leveling Agent (SURFYNOL 420) | - | 3.0 | - | - | - |
| Third Leveling Agent (SN WET 125) | - | - | 2.7 | 1.6 | 0.85 |
| Tackifier (SUPER ESTER E-865NT) | 30 | 30 | 30 | 30 | 30 |
| Silane Coupling Agent (Z-6210 SILANE) | 0.07 | 0.07 | 0.07 | 0.07 | 0.07 |
| Thickener + Leveling Agent | 4.1 | 5.5 | 5.7 | 1.95 | 1.85 |
| Solid Content Concentration (% by mass) | 40 | 40 | 30 | 40 | 40 |
| Viscosity (mPa·s) | 1640 | 5730 | 1770 | 970 | 2730 |
| Surface Tension (mN/m) | 32.29 | 41.85 | 35.33 | 33.86 | 44.23 |
| Wetting Rate (%) | 100 | 100 | 93.3 | 13.3 | 73.3 |
| Evaluation of Wettability | Excellent | Excellent | Good | No Good | No Good |

### Description of Reference Numerals

- XI, X2: Pressure-sensitive adhesive sheet
- 10: Pressure-sensitive adhesive layer
- 11: Substrate
- S: Separator

## Claims

1. A water-dispersed pressure-sensitive adhesive composition comprising:
a water-dispersed polymer and water,
wherein the composition has a viscosity of 1500 mPa·s or more and 6000 mPa·s or less, and a surface tension of 30 mN/m or more and 43 mN/m or less.

2. The water-dispersed pressure-sensitive adhesive composition according to claim 1,
wherein the water-dispersed polymer is a polymer of a monomer component containing 70% by mass or more and 99.5% by mass or less of an alkyl (meth)acrylate, and 0.1% by mass or more and 10% by mass or less of a carboxy group-containing monomer.

3. The water-dispersed pressure-sensitive adhesive composition according to claim 2,
wherein the carboxy group-containing monomer is an acrylic acid and/or a methacrylic acid.

4. The water-dispersed pressure-sensitive adhesive composition according to any one of claims 1 to 3,
wherein the water-dispersed polymer includes a monomer unit derived from a reactive emulsifier.

5. The water-dispersed pressure-sensitive adhesive composition according to any one of claims 1 to 4, further comprising:
a thickener and/or a leveling agent.

6. The water-dispersed pressure-sensitive adhesive composition according to claim 5,
wherein the thickener includes a polyacrylic acid.

7. The water-dispersed pressure-sensitive adhesive composition according to claims 5 or 6,
wherein the content of the thickener is 0.5 parts by mass or more and 7 parts by mass or less with respect to 100 parts by mass of the water-dispersed polymer.

8. The water-dispersed pressure-sensitive adhesive composition according to any one of claims 5 to 7,
wherein the leveling agent includes at least one selected from the group consisting of sodium dialkylsulfosuccinate, acetylene glycol ethylene oxide surfactant, and modified silicone surfactant.

9. The water-dispersed pressure-sensitive adhesive composition according to any one of claims 5 to 8,
wherein the content of the leveling agent is 0.5 parts by mass or more and 8 parts by mass or less with respect to 100 parts by mass of the water-dispersed polymer.

10. The water-dispersed pressure-sensitive adhesive composition according to any one of claims 5 to 9,
wherein the total content of the thickener and the leveling agent is 2 parts by mass or more and 10 parts by mass or less with respect to 100 parts by mass of the water-dispersed polymer.

11. A pressure-sensitive adhesive sheet comprising:
a pressure-sensitive adhesive layer formed from the water-dispersed pressure-sensitive adhesive composition according to any one of claims 1 to 10, and having a thickness of 20 µm or less.
